Europäisches Patentamt

European Patent Office

Office européen des brevets

(11) Publication number: **0 420 104 A2**

# EUROPEAN PATENT APPLICATION

(21) Application number: **90118311.1**

(22) Date of filing: **24.09.90**

(51) Int. Cl.⁵: **B01D 45/08**

(30) Priority: **28.09.89 IT 8258789**

(43) Date of publication of application:
**03.04.91 Bulletin 91/14**

(84) Designated Contracting States:
**AT BE CH DE DK ES FR GB GR IT LI LU NL SE**

(71) Applicant: **Bernardi, Lodovico**
**Via Noalese 37**
**I-31055 Quinto di Treviso (Treviso)(IT)**

(72) Inventor: **Bernardi, Lodovico**
**Via Noalese 37**
**I-31055 Quinto di Treviso (Treviso)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) Device for separating/decanting powderlike and low-weight particles in air flows.

(57) Device (5) adapted for allowing the separation, by decanting, of powderlike and low-weight particles present in air flows, having one or more separators/decanters (9), arranged individually or in parallel or in series and associated with the discharge of air flow thereof. Each of the one or more separators/decanters (9) has a first cylinder (11) which has an essentially frustum-like shape and is connected, in a downward position, to means (12,13) for the removal of the powderlike and low-weight particles. Each separator/decanter (9) further has, in an upward position, a second coaxial cylinder (14) which is shorter and partially protrudes therefrom. The second cylinder (14) has a plurality of radial deflector vanes (16) for slowing and conveying the air to be treated to the vortex and is connected, in an upward position, to the first cylinder (11) of at least one adjacent separator/decanter (9).

FIG.1

## DEVICE FOR SEPARATING/DECANTING POWDERLIKE AND LOW-WEIGHT

PARTICLES IN AIR FLOWS

The present invention relates to a device suitable for allowing the separation, by decanting, of powderlike and low-weight particles present in air flows. The invention is particularly used for decanting air flows present in machines intended for the cleaning of granular products with air recirculation and used in milling and fodder-production systems in order to both recover powderlike products mixed with air and to protect and safeguard the environment.

The use is known, for example in a cleaning section of a mill, of a single suction system which draws impure air, for example from a stone remover or pneumatic sifter or sifters combined with horizontal brushes.

Said impure air is crudely purified in a single decanting centrifugal separator constituted by a frustum-shaped cylinder the upper end whereof, particularly spiral-shaped, imparts a circular motion to the flow of air along the inner wall of said separator, producing a vortex the base whereof is characterized by a lower speed which causes the gravity fall (decanting) of the heavier powderlike particles.

After the coarse treatment in the centrifugal separator, the air is then directed to be filtered by a sleeve filter before being finally reintroduced into the environment.

Said sleeve filters are constituted for example by a box-like body which contains a series of sleeves made of filtering fabric through which the impure air is purified.

At the lower part of said known box-like bodies there is also a system for discharging powderlike substances by means of a star valve; the conveyance of said falling powder to the valve occurs by means of a bladed impeller or by means of a conical hopper.

In the upper part of the box-like body there is a chamber for the purified air which internally contains a device for blowing air for cleaning the sleeves; when the air to be purified passes at said sleeves, the powder in fact deposits on the sleeves, which are periodically affected by a current of high-pressure dry air in counterpressure obtained for example by means of a rotary-vane compressor.

In this manner the sleeves are freed from the powder, which is extracted and discharged through said star valve.

All said known types of device, however, have disadvantages; considerable complexity is in fact observed due to the necessary presence of devices and systems suitable for allowing the cleaning of the sleeves, such as for example compressors and related valves and ducts.

For the individual centrifugal separator there is instead the disadvantage of a large bulk and of a partial and insufficient separation of the powder.

In all cases, hardly negligible management costs are observed which are due to constructive complexity and to the need to provide periodic inspections to check the wear of the various components and therefore to replace them.

The aim of the present invention is therefore to eliminate the disadvantages described above in known types by providing a device which, when interposed in a flow of air which is contaminated by low-weight and volatile powder and particles which exit from machines intended for cleaning granular products with air recirculation, such as for example a pneumatic sifter, allows to separate the impurities from the air so that said air, once it has become pure, can be recycled and the impurities can be extracted.

Within the scope of the above described aim, an important object is to provide a device which is structurally very simple and easy to manufacture and has at the same time high performance and modest dimensions.

Another important object is to provide a device which allows to achieve the most complete separation of the powderlike and low-weight particles present in a flow of air without requiring particular additional devices.

Another important object is to provide a device which has a structure the components whereof are practically free from wear.

Another object is to provide a device which has very modest maintenance costs. .

Another object is to obtain a device which has very low energy consumption.

Not least object is to provide a device which associates with the preceding characteristics that of having modest production and management costs.

This aim, these objects and others which will become apparent hereinafter are achieved by a device for separating/decanting powderlike and low-weight particles in flows of air sucked up by machines intended for cleaning granular products with air recirculation, which is characterized in that comprises one or more separators/decanters arranged individually or in a mutually parallel or in series and associated with said machines at the discharge thereof, each of said one or more separators/decanters being composed of a first cylinder with an essentially frustum-like shape which is connected, in a downward position, to means for removing said powderlike and low-weight particles, which is provided, in an upward position, with a second coaxial cylinder which is shorter, partially protrudes therefrom and has a plurality of radial deflector vanes for slowing the air to be processed and conveying it to the vortex, said second cylinder being connected, in an upward position, to said first cylinder of at least one adjacent separator/decanter.

Further characteristics and advantages of the invention will become apparent from the detailed description of some particular but not exclusive embodiments, illustrated only by way of non-limitative example in the accompanying drawings, wherein:

figure 1 is a sectional elevation view, taken along a longitudinal median axis, of the device applied to a pneumatic sifter;

figure 2 is a view, similar to the preceding one, of the device in a different embodiment;

figure 3 is a partially sectional front view of the device applied to a stone remover;

figure 4 is a partially sectional side view of the device applied to a stone remover, pointing out the recycling of the purified air.

With reference to the above figures, the device is adapted for allowing the separation of powderlike and low-weight particles, generally indicated by the reference numeral 1, present in a flow of air 2 sucked up, for example, by machines intended for the cleaning of granular products 3, such as for example a pneumatic sifter 4 or a stone remover or a pneumatic sifter combined with a horizontal brush.

Said device, generally indicated by the reference numeral 5, is thus combined, in an original combination, with a pneumatic sifter which is known per se and comprises a first feed duct 6 for the granular products 3 which are directed, at a second suction duct 7, across a flow of air 2.

Said granular products 3 are fed into the second duct 7 so that they pass through the flow of air 2 in the form of a thin film in order to be deprived of the lighter and more volatile particles.

Said second duct 7, in which the powderlike and low-weight particles 1 are sucked, has a wall 8 which is movable so as to allow to vary the speed of the air and therefore the ability to remove lighter or heavier particles.

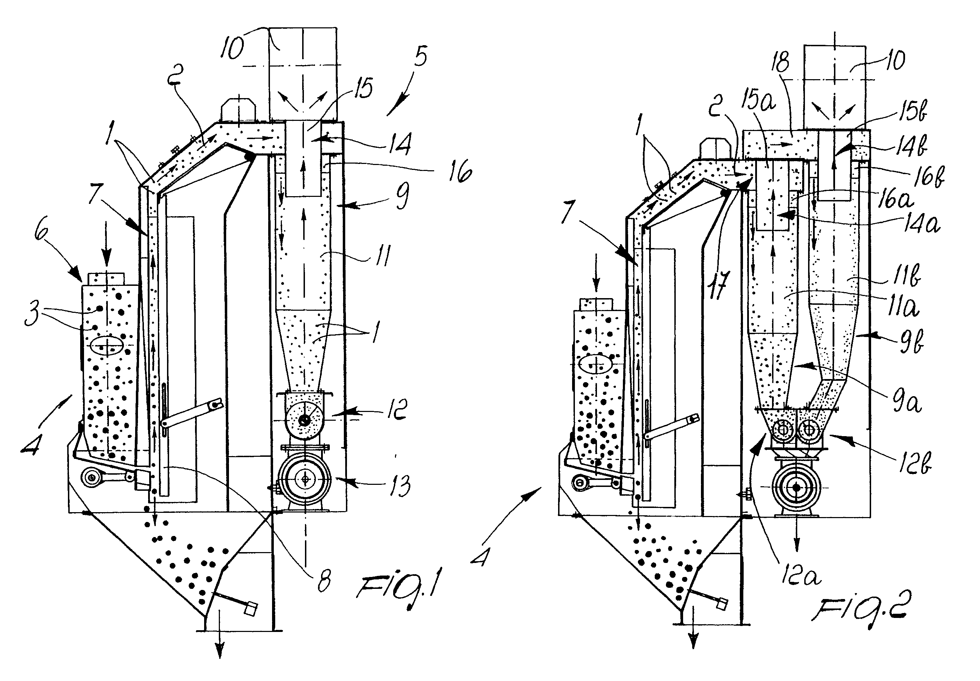

Said particles are then directed at the discharge of the second duct 7 to the device (5), which comprises one or more separators/decanters; in the embodiment illustrated in figure 1, a single separator/decanter 9 is used, to which is connected a third duct 10 for conveying the purified air at the second duct 7. It should be noted that a plurality of individual separators/decanters arranged mutually in parallel can also be used.

The separator/decanter 9 is constituted by a first cylinder 11 which essentially has the shape of a truncated cone with the vertex directed toward the resting plane of the device, which has its lower end connected to means for removing the powderlike and low-weight particles 1 which can be for example constituted by one or more worm screws 12 or possibly by a hopper with an underlying valve 13 which is actuated by means of an adapted gearmotor.

The separator/decanter 9 furthermore comprises a second cylinder 14 which is coaxial to the first cylinder 11 and has, with respect to said first cylinder, a smaller longitudinal extension and an end 15 which protrudes upward therefrom.

Said end 15 is coupled, at the third duct 10, so that the powderlike and low-weight particles sucked up at the second duct 7 follow a path which carries them from said end to the interspace between the inner and outer side walls respectively of the first cylinder 11 and of the second cylinder 14.

The latter has, at the end of said first cylinder 11, a plurality of deflector vanes 16 which protrude radially therefrom at the entire interspace present with respect to the inner wall of the first cylinder 11.

Said deflector vanes can advantageously have a given inclination with respect to the longitudinal axis of the separator/decanter 9.

Said single separator/decanter or a possible plurality of separators/decanters can have very small constructive dimensions, and can, according to their applications be used in a rectilinear arrangement or in a different arrangement such as a square or circle.

It has thus been observed that the invention has achieved the intended aim and objects, a device having been obtained which allows to optimally purify the air from powderlike and low-weight particles directly in the various machines and to thus recycle the purified air, returning it directly into the suction area without said air ever making contact with the environment.

It is thus possible to achieve an absolute lack of polluting emissions into the environment.

The device furthermore has a very simple and compact structure which allows to achieve, by virtue of its greater simplicity, lower management costs and smaller dimensions for an equal performance.

The device furthermore has components which are subjected to almost non-existent wear and therefore does not require particular maintenance and is easy to manufacture.

The device finally has very low management costs also by virtue of the possibility of achieving a low energy consumption in view of its structural simplicity and of the absence of auxiliary devices for decanting the powders or of particular methods for injecting the air to be processed.

The invention is naturally susceptible to numerous modifications and variations, all of which are within the scope of the same inventive concept.

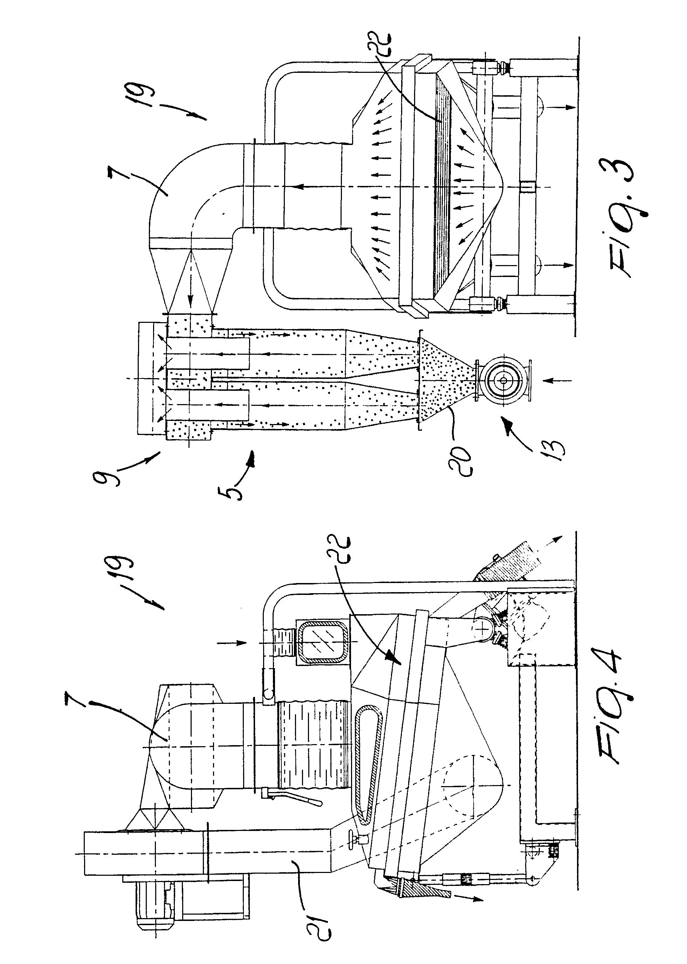

Thus, for example, figure 2 illustrates an embodiment which provides the use of at least two separators/decanters which are arranged in series and which are indicated by the numerals 9a and 9b.

As illustrated in figure 2, said two separators/decanters are arranged such that the separator/decanter 9a draws the powderlike and low-weight particles 1 from the second duct 7, directing the flow which exits therefrom, after treatment, to the separator/decanter 9b which in turn directs the flow of particles at the third duct 10 to return the flow of purified air back to the second duct 7.

Each of the separators/decanters 9a and 9b is in fact constituted by a first cylinder 11a and 11b which essentially has the shape of a truncated cone with the vertex directed toward the resting plane of the device, which has its lower end connected to an underlying worm screw 12a and 12b.

Each separator/decanter 9a and 9b is furthermore constituted by a second cylinder 14a and 14b which is coaxial to the first cylinders 11a and 11b and has, with respect to said first cylinders, a smaller longitudinal extension and an end 15a and 15b which protrudes upward therefrom.

The first cylinder 11a is connected, through at least one adapted hole 17, to the second duct 7 of the pneumatic sifter 4, and the powderlike and low-weight particles 1 sucked up thereat follow a path which leads them at the interspace between the inner lateral walls of the first cylinder 11a and the outer ones of the second cylinder 12a.

The latter has, together with the second cylinder 12b, at the end of said first cylinders 11a and 11b, a plurality of deflector vanes 16a and 16b which protrude therefrom radially at the entire interspace present with respect to the inner wall of the first cylinders 11a and 11b.

Said deflector vanes can advantageously have a given inclination with respect to the longitudinal axis of each separator/decanter 9a and 9b; said vanes perform their function by slowing and conveying the air to be treated inside the first cylinders 11a and 11b, where the powder, due to the vortex which is produced therein, is separated from the air, collected at the underlying scrolls 12a and 12b and removed.

The powder treated at the first cylinder 11a is directed, through the second cylinder 12a, into an adapted duct 18 for the conveyance of said powder at the adjacent first cylinder 11b; the air purified therein then flows out through the second cylinder 12b at the third duct 10 and is then returned at the second duct 7.

Said plurality of two or more separators/decanters can have very small constructive dimensions and can, depending on their application, be used in a rectilinear arrangement, as illustrated in figure 2, or in a different arrangement such as a square or circular one.

If suctions are to be performed in different processes, or if a space with particular dimensions is available, it is possible to combine a plurality of separators/decanters, giving the device a configuration with a circular or square plan.

In this case, too, the device has achieved the intended aim and objects, a device having been obtained which allows to optimally purify air from powderlike and low-weight particles directly in the various machines and therefore to be able to recycle the purified air, returning it directly into the suction area without said air ever making contact with the environment.

The use, in series or not, of one or more decanters/separators in fact allows the optimum purification of the air from powderlike and low-weight particles.

The invention is naturally susceptible to numerous other modifications and variations, all of which are within the scope of the same inventive concept.

Thus, for example, the deflector vanes which protrude from the second cylinder at the entire interspace present with respect to the inner wall of the first cylinder can be obtained by appropriately shaping like an uppercase U a plate or a sheet metal, and can be inclined with respect to the longitudinal axis of the second cylinder and have a helical extension with respect to said longitudinal axis.

As an alternative, the deflector vanes can be individually constituted by a single part which has the same configuration as the preceding solution.

Thus, figures 3 and 4 illustrate a different application of the device 5 to a stone remover 19; as can be deduced from the figures, separators/decanters 9 arranged on a quadrangular plan, used in parallel in the suction duct 7 of the stone remover 19 and connected to an underlying hopper 20 and related star valve 13 for the removal of the powder, have been used.

Advantageously, the purified air is sent into an adapted channel 21 at the sorting table 22 of the stone remover 19, thus allowing to eliminate possible powderlike emissions, preserving the environment from pollution.

The materials and the dimensions which constitute the individual components of the device may naturally also be the most pertinent according to the specific requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for separating/decanting powderlike and low-weight particles in flows of air which in particular are sucked up by machines intended for the cleaning of granular products with air recirculation, characterized in that it comprises one or more separators/decanters (9) arranged individually or in parallel or in series with respect to one another and associated with said machines (4,19) at the discharge thereof, each of said one or more separators/decanters (9) being composed of a first cylinder (11) essentially in the shape of a truncated cone which is connected, in a downward position, to means (12,13) for the removal of said powderlike and low-weight particles, which has, in an upward position, a second coaxial cylinder (14) which is shorter and partially protrudes therefrom and has a plurality of radial deflector vanes (16) for slowing and conveying the air to be treated to the vortex, said second cylinder (14) being connected, in an upward position, to said first cylinder (11) of at least one adjacent separator/idecanter (9).

2. Device according to claim 1, characterized in that said one or more separators/decanters (9) are associated with a pneumatic sifter (4) or with a stone remover (19), or with a densimetric classifier or with a pneumatic sifter combined with horizontal brushes or cereal cleaners.

3. Device according to claims 1 and 2, characterized in that said granular products (3) are introduced in a first feed duct (6) of said pneumatic sifter (4) and are then directed at a second suction duct (7) which is crossed by a flow of air (2) for separating said powderlike and low-weight particles (1), said particles (1) being directed at the discharge of said second duct (7) to said one or more separators/decanters (9), the outflowing purified air being returned, through a third duct (10), at said second duct (7) of said pneumatic sifter (4).

4. Device according to claim 1, characterized in that said two or more separators/decanters (9a,9b) arranged in series can assume a rectilinear arrangement or an arrangement within a plan with polygonal configuration.

5. Device according to claims 1 and 4, characterized in that the upper end of said first cylinder (11a) is connected, through an adapted opening (17), to said second duct (7) of said pneumatic sifter (4), the flow of particles subsequently affecting said second cylinder (15a) and then said third duct (10) or an adapted duct (18) connected to said first cylinder (11b) of at least one adjacent separator/decanter (9b) in a serial arrangement thereof.

6. Device according to claims 1 and 5, characterized in that said first cylinder (11) has the shape of a truncated cone with the vertex directed toward the resting plane for said device (5) and with the lower end connected to said means (12,13) for the removal of said powder.

7. Device according to claims 1 and 6, characterized in that said second cylinder (14) has, at the upper end of said first cylinder, a plurality of deflector vanes (16) which protrude radially therefrom and entirely affect the interspace present with respect to the inner wall of said first cylinder (11).

8. Device according to claims 1 and 7, characterized in that said deflector vanes (16) have, or do not have, a given inclination with respect to the longitudinal axis of said separator (9).

9. Device according to claims 1 and 8, characterized in that said deflector vanes (16) constitute a device for slowing and conveying the air to be treated to the vortex along the inner smooth wall of said first cylinder (11).

10. Device according to one or more of the preceding claims, characterized in that said deflector vanes (16) are obtained by appropriately shaping like an uppercase U a plate or a sheet metal, said vanes being inclined with respect to the longitudinal axis of said second cylinder (11) and having a helical extension with respect to said longitudinal axis.

11. Device according to one or more of the preceding claims, characterized in that it is applied at a stone remover (19) and in that it is constituted by a plurality of decanters/separators (9) arranged in parallel in a quadrangular plan, the air purified by said plurality of decanters/separators being returned at a sorting table (22) of said stone remover.

Fig.1

Fig.2

EP 0 420 104 A2

Fig. 3

Fig. 4

7